**Europäisches Patentamt**

(19) **European Patent Office**

**Office européen des brevets**

(11) Publication number : **0 438 912 B1**

(12) # EUROPEAN PATENT SPECIFICATION

(45) Date of publication of patent specification :
02.03.94 Bulletin 94/09

(51) Int. Cl.⁵ : **A23L 1/308, A23L 1/22, A23G 3/00, A23L 1/236**

(21) Application number : **90314229.7**

(22) Date of filing : **24.12.90**

(54) **Reduced-calorie non-cariogenic edible compositions containing polydextrose and an encapsulated flavoring agent and methods for preparing same.**

(30) Priority : **23.01.90 US 468553**

(43) Date of publication of application :
**31.07.91 Bulletin 91/31**

(45) Publication of the grant of the patent :
**02.03.94 Bulletin 94/09**

(84) Designated Contracting States :
**BE CH DE DK ES FR GB GR IT LI NL SE**

(56) References cited :
**EP-A- 0 123 742**
**EP-A- 0 252 874**
**EP-A- 0 254 401**
**EP-A- 0 351 972**
**EP-A- 0 377 278**
**EP-A- 0 398 465**
**WO-A-85/01421**
**US-A- 4 382 963**

(73) Proprietor : **WARNER-LAMBERT COMPANY**
**201 Tabor Road**
**Morris Plains New Jersey 07950 (US)**

(72) Inventor : **Cherukuri, Subraman Rao**
**10 Jean Drive**
**Towaco, New Jersey 07082 (US)**
Inventor : **Raman, Krishna P.**
**5 Marre Drive**
**Randolph, New Jersey 07869 (US)**
Inventor : **Orama, Angel**
**19 Elizabeth Avenue**
**Stanhope, New Jersey 07874 (US)**

(74) Representative : **Jones, Michael Raymond et al**
**HASELTINE LAKE & CO. Hazlitt House 28**
**Southampton Buildings Chancery Lane**
**London WC2A 1AT (GB)**

## Description

This invention pertains to reduced-calorie non-cariogenic edible compositions, which should have improved flavour release over a prolonged period of time; and to processes for their production. The novel compositions may be used in a variety of edible and confectionery products.

Polydextrose is a water-soluble, low-calorie non-cariogenic bulking agent which contributes the bulk and texture normally associated with sugars in many food products. Polydextrose is a randomly bonded highly branched glucose polymer prepared by polymerizing glucose and/or maltose by anhydrous melt polymerization techniques using non-volatile, edible, organic polycarboxylic acids and polyols as catalysts, cross-linking agents and/or polymerization activators. Polydextrose has a number average molecular weight between about 1,500 and 18,000 and contains (a) from about 0.5 to about 5 mole percent of a polycarboxylic acid ester group wherein the acid is selected from the group consisting of citric, fumaric, tartaric, succinic, adipic, itaconic, and malic acids, and (b) from about 5% to about 20% by weight of a food acceptable polyol selected from the group consisting of sorbitol, glycerol, erythritol, xylitol, mannitol, and galactitol, which is chemically bonded thereto.

Procedures for preparing Polyextrose are disclosed in United States patents nos. 3,766,165 and 3,876,794, issued to Rennhard. Polydextrose is commercially available from Pfizer Chemical Company.

Polydextrose is a low-calorie sugar substitute (containing about 1 calorie per gram) which has many of the technological properties of sugar without the sweetness. This non-sweet bulking agent is especially useful when used in combination with high intensity sweeteners to provide low-calorie food products having the desirable texture of conventional sugar-containing food products without the calories associated with such products.

Polydextrose is commercially available in three forms: Polydextrose A, an amorphous, slightly acidic (pH of 2.5-3.5) fusible powder; Polydextrose N, a potassium hydroxide partially neutralized (pH of 5-6) light-colored 70% aqueous solution of Polydextrose A; and Polydextrose K, a potassium bicarbonate partially neutralized (pH of 5-6) powder form of Polydextrose A.

All of these Polydextrose products contain quantities of unreacted monomers, such as glucose, sorbitol, as well as citric acid, 1,6-anhydroglucose (levoglucosan) and 5-hydroxymethylfurfural. For example, the amount of citric acid (or citric acid salts) present in Polydextrose A is about 0.9%, by weight.

Polydextrose has recently become available in a fourth form: Improved Polydextrose, a form of Polydextrose A which is substantially free of certain low molecular weight organic acids (pH of 3-4). In general, the acids are present in the bulking agent in an amount of less than about 0.3%, by weight. Removal of these low molecular weight acids helps to eliminate the off-taste associated with Polydextrose. Improved Polydextrose is a coarse material, contains more static charge than Polydextrose A, and is difficult to handle.

A disadvantage with using Polydextrose as a bulking agent is that when a flavoring agent is admixed with Polydextrose, the flavoring agent tends to be absorbed immediately by the bulking agent, forms a clumpy mixture, and cannot be mixed uniformly with the bulking agent. The resulting compositions are unsatisfactory as edible compositions because of the nonuniform mixture.

Polydextrose Research Product Bulletin, Pfizer, Central Research, Groton, Connecticut (1981), p. 11, discloses that a chewing gum composition can be prepared by micronizing a mixture of Polydextrose A, sodium bicarbonate, sorbitol and an intense sweetener, adding the milled mixture to a melted gum base mixture, and then adding peppermint oil and glycerin to the mixture in portions.

United States patent no. 4,382,963, issued to Klose et al. and assigned to General Foods Corporation, discloses a low-calorie, sugar-free chewing gum composition wherein a flavoring agent is added to a mixture of softened gum base and spray-dried Polydextrose N bulking agent.

United States patent no. 4,765,991, issued to Cherukuri et al. and assigned to Warner-Lambert Company, discloses a reduced-calorie chewing gum composition wherein a flavoring agent is added to a mixture of a high percentage of a non-styrene-butadiene copolymer/polyvinyl acetate elastomer chewing gum base and a small percentage of a polysaccharide selected from the group consisting of Polydextrose, polymaltose, modified Polydextrose, and mixtures thereof.

United States patent no. 4,622,233, issued to Torres, and United States patent applications serial nos. 043,793 and 193,961, both of which are assigned to Warner-Lambert Company, disclose methods for purifying Polydextrose.

United States patent no. 4,688,519, issued to Dartey et al. and assigned to Nabisco Brands, discloses a cookie which comprises from about 5% to about 20% polydextrose. Polydextrose is added to replace shortening or fat and sugar to avoid lumpiness.

United States patent no. 4,631,196, issued to Zeller, discloses a low calorie dairy product which contains from 5% to 30% sugars consisting of a mixture of 10% to 90% polydextrose and 90% to 10% fructose.

While the above methods provide edible compositions containing Polydextrose, none of the above methods has overcome the problem of mixing a flavoring agent uniformly with Polydextrose. Thus it would be commercially advantageous to furnish Polydextrose bulking agent compositions uniformly mixed with a flavoring agent to provide non-cariogenic edible compositions having a significant reduction in calories. The present invention provides such improved flavored Polydextrose compositions without the disadvantages characteristic of previously known compositions. The novel flavored bulking agent compositions may be used in a variety of sugarless reduced-calorie edible and confectionery products. The present invention also pertains to methods for preparing edible and confectionery products in which the novel flavored bulking agent compositions may be used.

According to one aspect of the present invention, there is provided a reduced-calorie non-cariogenic edible composition which includes:

(a) a bulking agent comprising Polydextrose;
(b) an encapsulated flavouring agent; and
(c) an effective amount of an intense sweetening agent.

According to another aspect of the present invention, there is provided a process for producing a reduced-calorie non-cariogenic edible composition, which process comprises admixing the bulking agent comprising Polydextrose, the encapsulated flavouring agent, and an effective amount of the intense sweetening agent to form a homogenous mixture.

In a preferred embodiment, the bulking agent comprising Polydextrose will be present in the reduced calorie non-cariogenic edible composition in an amount up to approximately 99.94%, preferably in an amount up to approximately 99.84%, and more preferably in an amount up to approximately 99.7%, by weight of the edible composition. The liquid flavouring agent in the encapsulated flavouring agent will be present in the edible composition in amounts from 0.05% to 1.0%, preferably in amounts from 0.05% to 0.5%, and more preferably, in amounts from 0.1% to 0.3%, by weight of the Polydextrose composition. The intense sweetening agent will be present in the edible composition in an amount from 0.01% to 0.5%, more preferably in an amount from 0.1% to 0.4%, and most preferably in an amount from 0.2% to 0.3%, by weight of the edible composition.

Applicants have found that when an encapsulated flavoring agent is mixed with Polydextrose, the encapsulated flavoring agent is not readily absorbed by the bulking agent, does not form a clumpy mixture, and can be mixed uniformly in the bulking agent to form a homogeneous edible composition. Applicants believe that Polydextrose possesses a decreased hydrophilic nature because of its polymeric character. Hence, when flavor oils are admixed with Polydextrose, the oils are readily absorbed by the bulking agent, form clumps, and are not easily mixed into the Polydextrose to form a uniform mixture. This is in contrast to conventional bulking agents Such as sugars and sugar alcohols which possess significant hydrophilic character, which do not readily absorb flavor oils, and which can be uniformly mixed with flavor oils. By encapsulating the flavor oils in solid or semi-solid form, the oils are not readily absorbed, do not form a clumpy mixture, and can be easily mixed into Polydextrose.

As set out above, the bulking agent in the present invention is Polydextrose. The bulking agent may be any of the commercially available forms of Polydextrose such as Polydextrose A, an amorphous, slightly acidic (pH of 2.5-3.5) fusible powder, Polydextrose N, a potassium hydroxide partially neutralized (pH of 5-6) light-colored 70% aqueous solution of Polydextrose A, and Polydextrose K, a potassium bicarbonate partially neutralized (pH of 5-6) powder form of Polydextrose A.

The bulking agent may also be Improved Polydextrose, a form of Polydextrose A which is substantially free of certain low molecular weight organic acids (pH of 3-4). In general, the acids are present in Improved Polydextrose in an amount of less than 0.3%, preferably less than 0.2%, and more preferably less than 0.1%, by weight Improved Polydextrose is a coarse material and has a particle size such that only 35% of the particles axe under about 125 micrometres in diameter.

The bulking agent may also be pulverized Improved Polydextrose having a particle size of under 125 micrometres in diameter. Pulverized Improved Polydextrose may be prepared from Improved Polydextrose by the method which comprises the steps of (a) admixing Improved Polydextrose with an anti-caking agent to form a mixture, and (b) pulverizing the mixture to form the pulverized Improved Polydextrose.

Useful anti-caking agents to prepare pulverized Improved Polydextrose include calcium phosphate, calcium silicate, calcium stearate; cellulose, microcrystalline cellulose, kaolin, magnesium carbonate, magnesium hydroxide, magnesium silicate (talc), magnesium stearate, silicon dioxide (marketed under the tradename SYLOID by W.R. Grace), sodium ferrocyanide, sodium silicoaluminate, sodium calcium silicoaluminate, sucrose esters, aluminum calcium silicates, and mixtures thereof. In a preferred embodiment, the anti-caking agent is selected from the group consisting of SYLOID, cellulose, microcrystalline cellulose, and mixtures thereof. In a more preferred embodiment, the anti-caking agent is SYLOID.

The amount of anti-caking agent to be added to Improved Polydextrose to prepare pulverized Improved Polydextrose is that amount of anti-caking agent necessary to reduce the static charge content of the Improved Polydextrose such that the Improved Polydextrose can be pulverized to form particles where approximately 80% of the particles are under 125 micrometres in diameter. In general, the amount of anti-caking agent to be added to the Improved Polydextrose will be in the range from 0.1% to 5%, preferably from 0.5% to 3%, and more preferably from 1% to 2%, by weight.

Useful diluents (diluting agents) which may be optionally included with the anti-caking agents to prepare pulverized Improved Polydextrose include maltodextrin, sorbitol, maltitol, cellulose, microcrystalline cellulose, and mixtures thereof. As set out above for anti-caking agents, the amount of diluent to be added to the Improved Polydextrose is that amount of diluent necessary to reduce the static charge content of the Improved Polydextrose such that the Improved Polydextrose can be pulverized to form particles where approximately 80% of the particles are under 125 micrometres in diameter

Improved Polydextrose may be pulverized or milled according to the method set out above using standard techniques and equipment known to those skilled in the art. The apparatus useful in accordance with the present invention comprises milling apparatus well known in the confectionery manufacturing arts, and therefore the selection of the specific apparatus and the milling conditions will be apparent to the artisan. Methods for preparing pulverized Improved Polydextrose are more fully described in United States patent application no. 354,650, filed May 19, 1989.

In a preferred embodiment, the bulking agent in the present invention is Improved Polydextrose. In general, the bulking agent comprising Polydextrose will be present in the reduced-calorie non-cariogenic edible composition in an amount up to 99.94%, preferably in an amount up to 99.84%, and more preferably in an amount up to 99.7%, by weight of the edible composition.

The encapsulated flavoring agents useful in the present invention may be any composite flavoring agent in solid or semi-solid form known in the art provided that the flavoring agent is not readily absorbed by the Polydextrose bulking agent. Examples of encapsulated flavoring agents include hydrophobic flavoring agents comprising a flavoring agent and a fatty or waxy hydrophobic coating component, hydrophobic resin flavoring agents comprising a flavoring agent, a resin component, and a fatty or waxy hydrophobic coating component, spray dried flavoring agents comprising a flavoring agent and a film forming polymer, and adsorbate flavoring agents comprising a flavoring - agent and a sorbent.

Useful flavoring agents (flavors, flavorings) which may be incorporated into the encapsulated flavoring agents include natural and artificial flavors. These flavoring agents may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavoring agents are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, artificial vanilla, cinnamon derivatives, and various fruit flavors, whether employed individually or in admixture.

Other useful flavoring agents include aldehydes and esters such as cinnamyl acetate, cinnamaldehyde, citral diethylacetal, dihydrocarvyl acetate, eugenyl formate, p-methylamisol, and so forth may be used. Generally any flavoring agent or food additive such as those described in Chemicals Used in Food Processing, publication 1274, pages 63-258, by the National Academy of Sciences, may be used.

Further examples of aldehyde flavoring agents include acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, mixtures thereof. In a preferred embodiment, the flavoring agent is peppermint oil.

The hydrophobic coating component which may be employed in the hydrophobic flavoring agent may be selected from the group consisting of fats, waxes, and mixtures thereof. Useful fats may be selected from any number of conventional materials such as fatty acids, glycerides or polyglycerol esters, sorbitol esters, and mixtures thereof. Examples of fatty acids include hydrogenated and partially hydrogenated vegetable oils such as palm oil, palm kernel oil, peanut oil rapeseed oil, rice bran oil, soybean oil, cottonseed oil, sunflower oil, safflower oil, and mixtures of partially hydrogenated soybean oil and partially hydrogenated cottonseed oil (Durkee 17), and mixtures thereof. Glycerides which are useful include monoglycerides, diglycerides, and triglycerides. Waxes useful may be chosen from the group consisting of natural and synthetic waxes, and mixtures thereof. Examples include paraffin wax, petrolatum, polyolefin waxes, carbowax, microcrystalline wax, beeswax, carnauba wax, candellila wax, lanolin, bayberry wax, sugarcane wax, spermaceti wax, rice bran wax, and mixtures thereof.

In a preferred embodiment, the hydrophobic coating component is selected from the group consisting of paraffin wax, microcrystalline wax, carnauba wax, polyethylene wax, and mixtures of partially hydrogenated soybean oil and partially hydrogenated cottonseed oil, and mixtures thereof. In a more preferred embodiment, the hydrophobic coating component is selected from the group consisting of microcrystalline wax, carnauba wax, and mixtures of partially hydrogenated soybean oil and partially hydrogenated cottonseed oil, and mixtures thereof.

Hydrophobic flavoring agents comprising a flavoring agent and a hydrophobic coating component are generally prepared by admixing the flavoring agent in the melted hydrophobic coating component and spray congealing the homogeneous mixture to form particles of the composite flavor. Typical hydrophobic flavoring agents and methods for preparing same are more fully described in United States patents no. 4,597,970 and 4,722,845.

The encapsulated flavoring agent may also be a hydrophobic resin flavoring agent comprising a flavoring agent, a resin component, and a hydrophobic coating component. The fats and waxes useful in the hydrophobic coating component set out above may also be used in the hydrophobic coating component in the hydrophobic resin flavoring agent.

The term "resin," as used herein refers to resins such as wood rosins, rosin esters and ester gums. suitable resins may be selected from terpinene resins such as polymers of alpha-pinene or beta-pinene, methyl, glycerol and pentaerythritol esters of rosins and modified rosins and gums, such as hydrogenated, dimerized and polymerized rosins, and mixtures thereof. Examples of resins suitable for use herein include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and mixtures thereof.

Hydrophobic resin flavoring agents comprising a flavoring agent, a resin component, and a hydrophobic coating component are generally prepared by admixing the flavoring agent in the melted hydrophobic coating component and melted resin component and spray congealing the homogeneous mixture to form particles of the composite flavor. Typical hydrophobic resin flavoring agents and methods for preparing same are more fully described in United States patent application no. 361,529, filed June 5, 1989.

The film forming polymers which may be employed in the spray dried flavoring agent may be water-soluble or water-insoluble and may be selected from the group consisting of cellulose derivatives such as ethylcellulose, hydroxypropylcellulose, hydroxypropylmethylcellulose phthalate, methylcellulose, sodium carboxymethylcellulose, and mixtures thereof. Other suitable film forming polymers include acrylic resin dispersions such as polyacrylamide, polyacryldextran, polyalkyl cyanoacrylate, polymethyl methacrylate, and mixtures thereof. Other suitable film forming polymers include acacia (gum arabic), modified starches, alginates, and mixtures thereof. In a preferred embodiment, the film forming polymer is gum acacia.

Spray dried flavoring agents comprising a flavoring agent and a film forming polymer are generally prepared by admixing the flavoring agent in an aqueous dispersion of the film forming polymer and spray drying the homogeneous mixture to form particles of the composite flavor. Typical spray dried flavoring agents and methods for preparing same are more fully described in United States patent no. 4,568,560.

The sorbent which may be employed in the adsorbate flavoring agent may be any edible sorbent known in the art which will sorb a solution or mixture of the flavoring agent to form a solid or semi-solid adsorbate flavoring agent. Suitable sorbents include a complex magnesium aluminum silicate or magnesium trisilicate.

Adsorbate flavoring agents comprising a flavoring agent and a sorbent are generally prepared by admixing the flavoring agent and the sorbent in a sufficient amount of solvent to dissolve the flavoring agent and to form a mass of flavoring agent and sorbent in an adsorbed condition. Typical adsorbates and methods for preparing same are more fully described in United States patents nos. 4,647,459, 4,711,774, and 4,716,033.

In a preferred embodiment, the encapsulated flavoring agent is selected from the group consisting of hydrophobic flavoring agents, spray dried flavoring agents, and mixtures thereof. In a more preferred embodiment, the encapsulated flavoring agent is a hydrophobic flavoring agent.

In general, an effective amount of liquid flavoring agent is utilized in the encapsulated flavoring agent to provide the level of flavor desired in the Polydextrose composition, and this amount will vary with the flavor and encapsulating material selected. The amount of flavoring agent employed herein is normally a matter of preference subject to such factors as the individual flavor, the strength of flavor desired, the type of encapsulated flavoring agent employed, and the final edible composition. Thus, the amount of flavoring may be varied in order to obtain the result desired in the final product and such variations are within the capabilities of those skilled in the art without the need for undue experimentation. The liquid flavoring agent in the encapsulated flavoring agent is generally present in the edible composition in amounts from 0.05% to 1.0%, preferably in amounts from 0.05% to 0.5%, and more preferably, in amounts from 0.1% to 0.3%, by weight of the Polydextrose composition.

In general, an effective amount of encapsulated flavoring agent is utilized in the edible composition to provide the level of flavor desired, and this amount will vary with the encapsulated flavor selected. The amount of encapsulated flavoring agent employed herein is normally a matter of preference subject to such factors as the individual flavor, the strength of flavor desired, the type of encapsulated flavoring agent employed, and the final edible composition. Thus, the amount of encapsulated flavoring agent may be varied in order to obtain the result desired in the final product and such variations are within the capabilities of those skilled in the art without the need for undue experimentation.

The intense sweetening agents (intense sweeteners) used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Representative categories and examples include:

(a) water-soluble sweetening agents such as dihydrochalcones, monellin, steviosides, glycyrrhizin, dihydroflavenol, and sugar alcohols such as sorbitol, mannitol, maltitol, and L-aminodicarboxylic acid aminoalkenoic acid ester amides, such as those disclosed in United States patent no. 4,619,834, and mixtures thereof;

(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin,

(c) dipeptide based sweeteners, such as L-aspartic acid derived sweeteners, such as L-aspartyl-L-phenylalanine methyl ester (Aspartame) and materials described in United States patent no. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenylglycine, L-aspartyl-2,5-dihydro-L-phenylalanine; L-aspartyl-L-(1-cyclohexen)-alanine.

(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalacto-sucrose derivatives include : 1-chloro-1'-deoxysucrose; 4-chloro-4-deoxy-alpha-D-galacto-pyranosyl-alpha-D-fructofuranoside, or 4-chloro-4-deoxygalactosucrose; 4-chloro-4-deoxy-alpha-D-galacto-pyranosyl-1-chloro-1-deoxy-beta-D-fructo-furanoside, or 4,1'-dichloro-4,1'-dideoxygalactosucrose; 1',6'-dichloro-1',6'-dideoxysucrose; 4-chloro-4-deoxy-alpha-D-galacto-pyranosyl-1,6-dichloro-1,6-dideoxy-beta-D-fructofuranoside, or 4,1',6'-trichloro-4,1',6'-trideoxygalactosucrose; 4,6-dichloro-4-,6-dideoxy-alpha-D-galacto-pyranosyl-6-chloro-6-deoxy-beta-D-fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideoxy-beta-D-fructofuranoside, or 4,6,1',6'-tetrachloro-4,6,1',6'-tetradeoxygalacto-sucrose; and 4,6,1',6'-tetrachloro-4,6,1',6'-tetradeoxy-sucrose; and

(e) protein based sweeteners such as thaumaoccous danielli (Thaumatin I and II).

The intense sweetening agents of the present invention may be used in many distinct physical forms well known in the art to provide an initial burst of sweetness and/or a prolonged sensation of sweetness. Such physical forms include free forms, such as spray dried, powdered, beaded forms, and encapsulated forms, and mixtures thereof.

In a preferred embodiment, the intense sweetening agent is Aspartame. In general, an effective amount of intense sweetener is utilized to provide the level of sweetness desired, and this amount will vary with the intense sweetener selected. The exact range of amounts for each type of intense sweetener is well known in the art and is not the subject of the present invention. In a preferred embodiment, the intense sweetening agent will be present in the reduced-calorie non-cariogenic edible composition in an amount from 0.01% to 0.5%, more preferably in an amount from 0.1% to 0.4%, and most preferably in an amount from 0.2% to 0.3%, by weight of the edible composition.

The edible compositions of this invention may also include effective amounts of mineral adjuvants which may serve as fillers and textural agents. Useful mineral adjuvants include calcium carbonate, magnesium car-

EP 0 438 912 B1

bonate, alumina, aluminum hydroxide, aluminum silicate, talc, tricalcium phosphate, dicalcium phosphate, and the like, and mixtures thereof. Other fillers include celluloses, microcrystalline cellulose, mannitol, maltitol, and isomalt (a racemic mixture of alpha-D-glucopyranosyl-1,6-mannitol and alpha-D-glucopyranosyl-1,6-sorbitol manufactured under the tradename Palatinit by Suddeutsche Zucker). These fillers or adjuvants may be used in the edible compositions in various amounts. Preferably the amount of filler, when used, will be present in an amount from 10% to 40%, and preferably from 20% to 30%, by weight of the edible composition.

A variety of traditional ingredients may be optionally included in the edible compositions in effective amounts such as coloring agents, antioxidants, preservatives. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional edible composition additives known to one having ordinary skill in the confectionery art may also be used in the edible compositions.

The present invention extends to methods of making the reduced-calorie non-cariogenic edible compositions. In such a method, an edible composition is prepared by admixing a bulking agent comprising Polydextrose, an encapsulated flavoring agent, and an effective amount of an intense sweetening agent to form a homogeneous mixture. Other ingredients will usually be incorporated into the composition as dictated by the nature of the desired composition as well known by those having ordinary skill in the art. The ultimate edible compositions are readily prepared using methods generally known in the food technology and pharmaceutical arts.

Once prepared, the reduced-calorie non-cariogenic edible compositions may be stored for future use or may be formulated with conventional additives to prepare a wide variety of edible products, such as foodstuffs, jellies, extracts, hard and soft confectionery products, tablets and pharmaceutical compositions.

An important aspect of the present invention pertains to improved hard and soft confectionery compositions which comprise the inventive reduced-calorie non-cariogenic edible compositions. The preparation of confectionery formulations is historically well known and has changed little through the years. Confectionery items have been classified as either "hard" confectionery or "soft" confectionery. The reduced-calorie non-cariogenic edible compositions of the present invention can be incorporated into confectionery compositions by admixing the inventive composition into conventional hard and soft confections.

Confectionery material may include such exemplary substances as lozenges, tablets, toffee, nougat, suspensions, chewy candy, chewing gum. The bulking agent is present in a quantity sufficient to bring the total amount of composition up to 100%.

Lozenges are flavored medicated dosage forms intended to be sucked and held in the mouth. Lozenges may be in the form of various shapes such as flat, circular, octagonal and biconvex forms. The lozenge bases are generally in two forms: hard, boiled candy lozenges and compressed tablet lozenges.

Hard boiled candy lozenges may be processed and formulated by conventional means. In general, a hard boiled candy lozenge has a base composed of a bulking agent kept in an amorphous or glassy condition. This amorphous or glassy form is considered a solid syrup generally having from 0.5% to 1.5% moisture. Further ingredients such as flavoring agents, sweetening agents, acidulants, coloring agents may also be added.

Boiled candy lozenges may also be prepared from bulking agents comprising Polydextrose. The candy lozenges may contain up to 95% bulking agent, by weight of the solid syrup component. Boiled candy lozenges may be routinely prepared by conventional methods such as those involving fire cookers, vacuum cookers, and scraped-surface cookers also referred to as high speed atmospheric cookers.

Fire cookers involve the traditional method of making a boiled candy lozenge base. In this method, the desired quantity of carbohydrate bulking agent is dissolved in water by heating the agent in a kettle until the bulking agent dissolves. Additional bulking agent may then be added and cooking continued until a final temperature of 145° C. to 156° C. is achieved. The batch is then cooled and worked as a plastic-like mass to incorporate additives such as flavoring agents and coloring agents.

A high-speed atmospheric cooker uses a heat-exchanger surface which involves spreading a film of candy on a heat exchange surface, the candy is heated to 165° C. to 170° C. in a few minutes. The candy is then rapidly cooled to 100° C. to 120° C. and worked as a plastic-like mass enabling incorporation of the additives, such as flavoring agents and coloring agents.

In vacuum cookers, the carbohydrate bulking agent is boiled to 125° C. to 132° C., vacuum is applied and additional water is boiled off without extra heating. When cooking is complete, the mass is a semi-solid and has a plastic-like consistency. At this point, flavoring agents, coloring agents, and other additives are admixed in the mass by routine mechanical mixing operations.

The optimum mixing required to uniformly mix the flavoring agents, coloring agents and other additives during conventional manufacturing of boiled candy lozenges is determined by the time needed to obtain a uniform distribution of the materials. Normally, mixing times of from 4 to 10 minutes have been found to be acceptable.

7

EP 0 438 912 B1

Once the boiled candy lozenge has been properly tempered, it may be cut into workable portions or formed into desired shapes. A variety of forming techniques may be utilized depending upon the shape and size of the final product desired. A general discussion of the composition and preparation of hard confections may be found in H.A. Lieberman, Pharmaceutical Dosage Forms: Tablets, Volume 1 (1980), Marcel Dekker, Inc., New York, N.Y. at pages 339 to 469.

In contrast, compressed tablet confections contain particulate materials and are formed into structures under pressure. These confections generally contain bulking agents in amounts up to 95%, by weight of the composition, and typical tablet excipients such as binders and lubricants as well as flavoring agents and coloring agents.

In addition to hard confectionery materials, the lozenges of the present invention may be made of soft confectionery materials such as those contained in nougat. The preparation of soft confections, such as nougat, involves conventional methods, such as the combination of two primary components, namely (1) a high boiling syrup bulking agent, and (2) a relatively light textured frappe, generally prepared from egg albumin, gelatin, vegetable proteins, such as soy derived compounds, sugarless milk derived compounds such as milk proteins, and mixtures thereof. The frappe is generally relatively light, and may, for example, range in density from C.5 to 0.7 grams/cc.

The high boiling syrup, or "bob syrup" of the soft confectionery is relatively viscous and has a higher density than the frappe component, and frequently contains a substantial amount of carbohydrate bulking agent. Conventionally, the final nougat composition is prepared by the addition of the "bob syrup" to the frappe under agitation, to form the basic nougat mixture. Further ingredients such as flavoring agents, additional carbohydrate bulking agent, coloring agents, preservatives, medicaments, mixtures thereof and the like may be added thereafter also under agitation. A general discussion of the composition and preparation of nougat confections may be found in B.W. Minifie, Chocolate, Cocoa and Confectionery: Science and Technology, 2nd edition, AVI Publishing Co., Inc., Westport, Conn. (1980), at pages 424-425.

The coloring agents useful in the present invention are used in amounts effective to produce the desired color. These coloring agents include pigments which may be incorporated in amounts up to 6%, by weight of the gum composition. A preferred pigment, titanium dioxide, may be incorporated in amounts up to 2%, and preferably less than 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative examples include the indigoid dye known as F.D.& C. Blue No. 2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884.

The procedure for preparing the soft confectionery involves known procedures. In general, the frappe component is prepared first and thereafter the syrup component is slowly added under agitation at a temperature of at least 65°C, and preferably at least 100° C. The mixture of components is continued to be mixed to form a uniform mixture, after which the mixture is cooled to a temperature below 80° C., at which point, the flavoring agent may be added. The mixture is further mixed for an additional period until it is ready to be removed and formed into suitable confectionery shapes.

The confectionery compositions of this invention may also be in chewable form. To achieve acceptable stability and quality as well as good taste and mouth feel in a chewable formulation several considerations are important. These considerations include the flavoring agent employed, the degree of compressibility of the tablet and the organoleptic properties of the composition.

Chewable candy is prepared by procedures similar to those used to make soft confectionery. In a typical procedure, a boiled bulking agent syrup blend is formed to which is added a frappe mixture. The bulking agent syrup blend is heated to temperatures above about 120° C. to remove water and to form a molten mass. The frappe is generally prepared from gelatin, egg albumin, milk proteins such as casein, and vegetable proteins such as soy protein, which is added to a gelatin solution and rapidly mixed at ambient temperature to form an aerated sponge like mass. The frappe is then added to the molten candy mass and mixed until homogeneous at temperatures between 65°C. and 120° C.

The additional ingredients can then be added such as flavoring agents and coloring agents to the homogeneous mixture as the temperature is lowered to 65° C.-95° C. The formulation is further cooled and formed into pieces of desired dimensions.

A general discussion of the lozenge and chewable tablet forms of confectionery may be found in H.A. Lieberman and L. Lachman, Pharmaceutical Dosage Forms: Tablets, Volume 1, Marcel Dekker, Inc., New York, N.Y. at pages 289 to 466.

In accordance with this invention, effective amounts of the flavored Polydextrose bulking agent composition of the present invention may be admixed into the hard and soft confections. These amounts are readily determined by those skilled in the art without the need for undue experimentation. The optional additives are present in the confection in a quantity sufficient to bring the total amount of confection composition up to 100%.

The present invention extends to methods of making the improved hard and soft confection compositions. The bulking agent compositions may be incorporated into an otherwise conventional hard or soft confection composition using standard techniques known to those skilled in the art.

The apparatus useful in accordance with the present invention comprises cooking and mixing apparatus well known in the confectionery manufacturing arts, and therefore the selection of the specific apparatus will be apparent to the artisan.

The present invention is further illustrated by the following examples. All parts and percentages in the examples and throughout the specification and claims are by weight of the final composition unless otherwise specified.

EXAMPLES 1-7

These examples illustrate reduced-calorie non-cariogenic edible compositions prepared according to the present invention.

The compositions of examples 1-7 are listed in Table 1.

TABLE 1

| Ingredient | Example | | | | | | |
|---|---|---|---|---|---|---|---|
| | 1 | 2 | 3 | 4 | 5 | 6 | 7 |
| | (Percentages By Weight) | | | | | | |
| Improved Polydextrose | 97.45 | 96.85 | 86.85 | 86.85 | 89.35 | 84.85 | 89.25 |
| Spray Dried Flavor (20%) | 1.00 | --- | --- | --- | --- | --- | --- |
| (Liquid flavor equivalent) | (0.2) | | | | | | |
| Encapsulated Flavor (12.5%) | --- | 1.60 | 1.60 | 1.60 | 1.60 | 1.60 | 1.60 |
| (Liquid flavor equivalent) | | (0.2) | (0.2) | (0.2) | (0.2) | (0.2) | (0.2) |
| Microcrystalline Cellulose | --- | --- | --- | 10.00 | 7.50 | 10.00 | 7.50 |
| Calcium Carbonate | --- | --- | 10.00 | --- | --- | --- | --- |
| Anti-caking Agent | 1.00 | 1.00 | 1.00 | 1.00 | 1.00 | 1.00 | 1.00 |
| Lubricant | 0.35 | 0.35 | 0.35 | 0.35 | 0.35 | 0.35 | 0.35 |
| Softener | --- | --- | --- | --- | --- | 2.00 | --- |
| Sweetening Agent | 0.20 | 0.20 | 0.20 | 0.20 | 0.20 | 0.20 | 0.30 |

The spray dried flavoring agent employed in example 1 comprised peppermint spray dried flavor with acacia carrier (20% peppermint oil). The encapsulated flavoring agent employed in examples 2-7 was a hydrophobic flavoring agent comprised of peppermint oil (12.5%) encapsulated in partially hydrogenated soybean oil and partially hydrogenated cottonseed oil (Durkee 17). The spray dried flavoring agent and the encapsulated flavoring agent were prepared by conventional spray drying and encapsulating techniques well known in the confectionery arts. The ingredients of examples 1-7 were admixed to form a homogeneous mixture and then compressed into tablets in accord with conventional confectionery tablet manufacturing techniques.

The flavor and flow properties of the edible compositions of examples 1-7 were judged by an expert panel. The composition of example 1 was judged to have good compressibility properties, capping (splitting, breaking), poor flow properties, good texture, good taste, and good up front flavor. The composition of example 2 was judged to have good compressibility properties, capping, poor flow properties, good texture, low up front flavor, and long lasting flavor. The composition of example 3 was judged to have good compressibility properties, no capping, good flow properties, low sweetness, low up front flavor, and long lasting flavor. The composition of example 4 was judged to have good compressibility properties, no capping, good flow properties, low sweetness, low up front flavor, and long lasting flavor. The composition of example 5 was judged to have good compressibility properties, no capping, good flow properties, low up front flavor, and long lasting flavor. The composition of example 6 was judged to have good compressibility properties, no capping, good flow properties, low sticking properties, and no weight variation (when compressed). The composition of example 7 was judged to have good compressibility properties, no capping, good flow properties, slow flavor release properties, and no weight variation.

The edible compositions of examples 1-7 were readily mixed into satisfactory homogeneous formulations.

## Claims

### Claims for the following Contracting States : BE, DK, FR, DE, GR, IT, NL, SE, CH, GB

1. A reduced-calorie non-cariogenic edible composition which includes a homogeneous mixture of:
   (a) a bulking agent comprising Polydextrose;
   (b) an encapsulated flavouring agent; and
   (c) an effective amount of an intense sweetening agent.

2. An edible composition according to claim 1, wherein the bulking agent is Polydextrose A.

3. An edible composition according to claim 1, wherein the bulking agent is Polydextrose N.

4. An edible composition according to claim 1, wherein the bulking agent is Polydextrose K.

5. An edible composition according to claim 1, wherein the bulking agent is Improved Polydextrose, substantially free of low molecular weight organic acids.

6. An edible composition according to claim 5, wherein the low molecular weight organic acids are present in an amount less than approximately 0.3%, by weight.

7. An edible composition according to claim 5 or 6, wherein the bulking agent is pulverized Improved Polydextrose having a particle size of under approximately 125 micrometres in diameter.

8. An edible composition according to any one of claims 1 to 7, wherein the encapsulated flavouring agent is a hydrophobic flavouring agent comprising a flavouring agent and a hydrophobic coating component selected from fats, waxes, and mixtures thereof.

9. An edible composition according to any one of claims 1 to 7, wherein the encapsulated flavouring agent is a hydrophobic resin flavouring agent comprising a flavouring agent, a resin component, and a hydrophobic coating component selected from fats, waxes, and mixtures thereof.

10. An edible composition according to any one of claims 1 to 7, wherein the encapsulated flavouring agent is a spray dried flavouring agent comprising a flavouring agent and a film forming polymer.

11. An edible composition according to any one of claims 1 to 7, wherein the encapsulated flavouring agent is an adsorbate flavouring agent comprising a flavouring agent and a sorbent.

12. An edible composition according to any preceding claim, wherein the intense sweetening agent is Aspartame.

13. An edible composition according to any preceding claim, wherein the bulking agent is present in an amount up to approximately 99.94%, by weight of the edible composition.

14. An edible composition according to any preceding claim, wherein the flavouring agent is present in an amount from 0.05% to 1%, by weight of the edible composition.

15. An edible composition according to any preceding claim, wherein the intense sweetening agent is present in an amount from 0.01% to 0.5%, by weight of the edible composition.

16. An edible composition according to claim 7, wherein the pulverized Improved Polydextrose is prepared by a method which comprises the steps of:
   (a) admixing Improved Polydextrose, substantially free of low molecular weight organic acids, with an anti-caking agent to form a mixture; and
   (b) pulverizing the mixture from step (a) to form the pulverized Improved Polydextrose.

17. An edible composition according to claim 16, wherein the anti-caking agent is selected from calcium phosphate, calcium silicate, calcium stearate, cellulose, kaolin, magnesium carbonate, magnesium hydroxide, magnesium silicate, magnesium stearate, silicon dioxide, sodium ferrocyanide, sodium silicoaluminate, sodium calcium silicoaluminate, sucrose esters, aluminium calcium silicates, and mixtures thereof.

18. An edible composition according to claim 16 or 17, wherein the anti-caking agent is present in the mixture of step (a) in an amount from 0.1% to 5%, by weight of the mixture.

19. An edible composition according to any preceding claim, wherein the composition is in the form of a tablet.

20. A process for producing a reduced-calorie non-cariogenic edible composition according to any preceding claim, which process comprises admixing the bulking agent comprising Polydextrose, the encapsulated flavouring agent, and an effective amount of the intense sweetening agent to form a homogenous mixture.

**Claims for the following Contracting State : ES**

1. A process for producing a reduced-calorie non-cariogenic edible composition, which process comprises admixing the bulking agent comprising Polydextrose, the encapsulated flavouring agent, and an effective amount of the intense sweetening agent to form a homogenous mixture.

2. A process according to claim 1, wherein the bulking agent is Polydextrose A.

3. A process according to claim 1, wherein the bulking agent is Polydextrose N.

4. A process according to claim 1, wherein the bulking agent is Polydextrose K.

5. A process according to claim 1, wherein the bulking agent is Improved Polydextrose, substantially free of low molecular weight organic acids.

6. A process according to claim 5, wherein the low molecular weight organic acids are present in an amount less than approximately 0.3%, by weight.

7. A process according to claim 5 or 6, wherein the bulking agent is pulverized Improved Polydextrose having a particle size of under approximately 125 micrometres in diameter.

8. A process according to any preceding claim, wherein the encapsulated flavouring agent is a hydrophobic flavouring agent comprising a flavouring agent and a hydrophobic coating component selected from fats, waxes, and mixtures thereof.

9. A process according any one of claims 1 to 7, wherein the encapsulated flavouring agent is a hydrophobic resin flavouring agent comprising a flavouring agent, a resin component, and a hydrophobic coating component selected from the group consisting of fats, waxes, and mixtures thereof.

10. A process according to any one of claims 1 to 7, wherein the encapsulated flavouring agent is a spray dried flavouring agent comprising a flavouring agent and a film forming polymer.

11. A process according to any one of claims 1 to 7, wherein the encapsulated flavouring agent is an adsorbated flavouring agent comprising a flavouring agent and a sorbent.

12. A process according to any preceding claim, wherein the intense sweetening agent is Aspartame.

13. A process according to any preceding claim, wherein the bulking agent is present in an amount up to approximately 99.94%, by weight of the edible composition.

14. A process according to any preceding claim, wherein the flavouring agent is present in an amount from 0.05% to 1%, by weight of the edible composition.

15. A process according to any preceding claim, wherein the intense sweetening agent is present in an amount from 0.01% to 0.5%, by weight of the edible composition.

16. A process according to claim 7, wherein the pulverized Improved Polydextrose is prepared by a. method which comprises the steps of:
    (a) admixing Improved Polydextrose, substantially free of low molecular weight organic acids, with an anti-caking agent to form a mixture; and
    (b) pulverizing the mixture from step (a) to form the pulverized Improved Polydextrose.

17. A process according to claim 16, wherein the anti-caking agent is selected from calcium phosphate, calcium silicate, calcium' stearate, cellulose, kaolin, magnesium carbonate, magnesium hydroxide, magnesium silicate, magnesium stearate, silicon dioxide, sodium ferrocyanide, sodium silicoaluminate, sodium calcium silicoaluminate, sucrose esters, aluminium calcium silicates, and mixtures thereof.

18. A process according to claim 16 or 17, wherein the anti-caking agent is present in the mixture of step (a) in an amount from 0.1% to 5%, by weight of the mixtures.

19. A process according to any preceding claim, wherein the composition is in the form of a tablet.

## Patentansprüche

**Patentansprüche für folgende Vertragsstaaten : BE, DK, FR, DE, GR, IT, NL, SE, CH, GB**

1. Kalorienreduzierte, nicht-karieserzeugende, eßbare Masse in Form eines homogenen Gemischs aus:
    (a) einem Füllmittel, umfassend Polydextrose;
    (b) einem eingekapselten Geschmacksstoff und
    (c) einer wirksamen Menge eines intensiven Süßungsmittels.

2. Eßbare Masse nach Anspruch 1, wobei das Füllmittel aus Polydextrose A besteht.

3. Eßbare Masse nach Anspruch 1, wobei das Füllmittel aus Polydextrose N besteht.

4. Eßbare Masse nach Anspruch 1, wobei das Füllmittel aus Polydextrose K besteht.

5. Eßbare Masse nach Anspruch 1, wobei das Füllmittel aus einer von niedrigmolekularen organischen Säuren praktisch freien verbesserten Polydextrose besteht.

6. Eßbare Masse nach Anspruch 5, wobei die niedrigmolekularen organischen Säuren in einer Menge von weniger als etwa 0,3 Gew.-% vorhanden sind.

7. Eßbare Masse nach Anspruch 5 oder 6, wobei das Füllmittel aus einer pulverisierten verbesserten Polydextrose einer Teilchengröße von unter etwa 125 μm Durchmesser besteht.

8. Eßbare Masse nach einem der Ansprüche 1 bis 7, wobei der eingekapselte Geschmacksstoff aus einem hydrophoben Geschmacksstoff, umfassend ein Geschmacksmittel und eine aus Fetten, Wachsen und Mischungen hiervon ausgewählte hydrophobe Beschichtungskomponente, besteht.

9. Eßbare Masse nach einem der Ansprüche 1 bis 7, wobei der eingekapselte Geschmacksstoff aus einem hydrophoben Harzgeschmacksstoff, umfassend ein Geschmacksmittel, eine Harzkomponente und eine aus Fetten, Wachsen und Mischungen hiervon ausgewählte hydrophobe Beschichtungskomponente, besteht.

10. Eßbare Masse nach einem der Ansprüche 1 bis 7, wobei es sich bei dem eingekapselten Geschmacksstoff um einen sprühgetrockneten Geschmacksstoff, umfassend ein Geschmacksmittel und ein filmbildendes Polymer, handelt.

11. Eßbare Masse nach einem der Ansprüche 1 bis 7, wobei es sich bei dem eingekapselten Geschmacksstoff

13

um einen Adsorbatgeschmacksstoff, umfassend ein Geschmacksmittel und ein Sorptionsmittel, handelt.

12. Eßbare Masse nach einem der vorhergehenden Ansprüche, wobei es sich bei dem intensiven Süßungsmittel um Aspartame handelt.

13. Eßbare Masse nach einem der vorhergehenden Ansprüche, wobei das Füllmittel in einer Menge von bis zu etwa 99,94 Gew.-% der eßbaren Masse vorhanden ist.

14. Eßbare Masse nach einem der vorhergehenden Ansprüche, wobei der Geschmacksstoff in einer Menge von 0,05 bis 1 Gew.-% der eßbaren Massse vorhanden ist.

15. Eßbare Masse nach einem der vorhergehenden Ansprüche, wobei das intensive Süßungsmittel in einer Menge von 0,01 bis 0,5 Gew.-% der eßbaren Masse vorhanden ist.

16. Eßbare Masse nach Anspruch 7, wobei die pulverisierte verbesserte Polydextrose nach einem folgende Stufen umfassenden Verfahren hergestellt ist:
(a) Vermischen einer im wesentlichen von niedrigmolekularen organischen Säuren freien verbesserten Polydextrose mit einem das Verbacken verhindernden Mittel zur Bildung einer Mischung und
(b) Pulverisieren der Mischung aus Stufe (a) zur Bildung der pulverisierten verbesserten Polydextrose.

17. Eßbare Masse nach Anspruch 16, wobei das das Verbacken verhindernde Mittel aus Calciumphosphat, Calciumsilikat, Calciumstearat, Cellulose, Kaolin, Magnesiumcarbonat, Magnesiumhydroxid, Magnesiumsilikat, Magnesiumstearat, Siliciumdioxid, Natriumferrocyanid, Natriumsilicoaluminat, Natriumcalciumsilicoaluminat, Saccharoseestern, Aluminiumcalciumsilikaten und Mischungen derselben ausgewählt ist.

18. Eßbare Masse nach Anspruch 16 oder 17, wobei das das Verbacken verhindernde Mittel in dem Gemisch aus Stufe (a) in einer Menge von 0,1 bis 5 Gew.-% des Gemischs vorhanden ist.

19. Eßbare Masse nach einem der vorhergehenden Ansprüche, wobei sie in Tablettenform vorliegt.

20. Verfahren zur Herstellung einer kalorienreduzierten, nicht-karieserzeugenden, eßbaren Masse nach einem der vorhergehenden Ansprüche durch Vermischen des Polydextrose umfassenden Füllmittels, des eingekapselten Geschmacksstoffs und einer wirksamen Menge des intensiven Süßungsmittels zur Bildung eines homogenen Gemischs.

**Patentansprüche für folgenden Vertragsstaat : ES**

1. Verfahren zur Herstellung einer kalorienreduzierten, nicht-karieserzeugenden, eßbaren Masse durch Vermischen des Polydextrose umfassenden Füllmittels, des eingekapselten Geschmacksstoffs und einer wirksamen Menge des intensiven Süßungsmittels zur Bildung eines homogenen Gemischs.

2. Verfahren nach Anspruch 1, wobei das Füllmittel aus Polydextrose A besteht.

3. Verfahren nach Anspruch 1, wobei das Füllmittel aus Polydextrose N besteht.

4. Verfahren nach Anspruch 1, wobei das Füllmittel aus Polydextrose K besteht.

5. Verfahren nach Anspruch 1, wobei das Füllmittel aus einer von niedrigmolekularen organischen Säuren praktisch freien verbesserten Polydextrose besteht.

6. Verfahren nach Anspruch 5, wobei die niedrigmolekularen organischen Säuren in einer Menge von weniger als etwa 0,3 Gew.-% vorhanden sind.

7. Verfahren nach Anspruch 5 oder 6, wobei das Füllmittel aus einer pulverisierten verbesserten Polydextrose einer Teilchengröße von unter etwa 125 μm Durchmesser besteht.

8. Verfahren nach einem der vorhergehenden Ansprüche, wobei der eingekapselte Geschmacksstoff aus einem hydrophoben Geschmacksstoff, umfassend ein Geschmacksmittel und eine aus Fetten, Wachsen und Mischungen hiervon ausgewählte hydrophobe Beschichtungskomponente, besteht.

9. Verfahren nach einem der Ansprüche 1 bis 7, wobei der eingekapselte Geschmacksstoff aus einem hydrophoben Harzgeschmacksstoff, umfassend ein Geschmacksmittel, eine Harzkomponente und eine aus Fetten, Wachsen und Mischungen hiervon ausgewählte hydrophobe Beschichtungskomponente, besteht.

10. Verfahren nach einem der Ansprüche 1 bis 7, wobei es sich bei dem eingekapselten Geschmacksstoff um einen sprühgetrockneten Geschmacksstoff, umfassend ein Geschmacksmittel und ein filmbildendes Polymer, handelt.

11. Verfahren nach einem der Ansprüche 1 bis 7, wobei es sich bei dem eingekapselten Geschmacksstoff um einen Adsorbatgeschmacksstoff, umfassend ein Geschmacksmittel und ein Sorptionsmittel, handelt.

12. Verfahren nach einem der vorhergehenden Ansprüche, wobei es sich bei dem intensiven Süßungsmittel um Aspartame handelt.

13. Verfahren nach einem der vorhergehenden Ansprüche, wobei das Füllmittel in einer Menge von bis zu etwa 99,94 Gew.-% der eßbaren Masse vorhanden ist.

14. Verfahren nach einem der vorhergehenden Ansprüche, wobei der Geschmacksstoff in einer Menge von 0,05 bis 1 Gew.-% der eßbaren Massse vorhanden ist.

15. Verfahren nach einem der vorhergehenden Ansprüche, wobei das intensive Süßungsmittel in einer Menge von 0,01 bis 0,5 Gew.-% der eßbaren Masse vorhanden ist.

16. Verfahren nach Anspruch 7, wobei die pulverisierte verbesserte Polydextrose nach einem folgende Stufen umfassenden Verfahren hergestellt ist:
    (a) Vermischen einer im wesentlichen von niedrigmolekularen organischen Säuren freien verbesserten Polydextrose mit einem das Verbacken verhindernden Mittel zur Bildung einer Mischung und
    (b) Pulverisieren der Mischung aus Stufe (a) zur Bildung der pulverisierten verbesserten Polydextrose.

17. Verfahren nach Anspruch 16, wobei das das Verbacken verhindernde Mittel aus Calciumphosphat, Calciumsilikat, Calciumstearat, Cellulose, Kaolin, Magnesiumcarbonat, Magnesiumhydroxid, Magnesiumsilikat, Magnesiumstearat, Siliciumdioxid, Natriumferrocyanid, Natriumsilicoaluminat, Natriumcalciumsilicoaluminat, Saccharoseestern, Aluminiumcalciumsilikaten und Mischungen derselben ausgewählt ist.

18. Verfahren nach Anspruch 16 oder 17, wobei das das Verbacken verhindernde Mittel in dem Gemisch aus Stufe (a) in einer Menge von 0,1 bis 5 Gew.-% des Gemischs vorhanden ist.

19. Verfahren nach einem der vorhergehenden Ansprüche, wobei die Masse in Tablettenform vorliegt.


**Revendications**

**Revendications pour les Etats contractants suivants : BE, DK, FR, DE, GR, IT, NL, SE, CH, GB**

1. Une composition comestible non caryogène à teneur réduite en calories, qui comprend un mélange homogène de:
   (a) un agent de charge comprenant du polydextrose;
   (b) un agent aromatisant encapsulé; et
   (c) une quantité efficace d'un agent édulcorant intense.

2. Une composition comestible selon la revendication 1, caractérisée en ce que la charge correspond à du polydextrose A.

3. Une composition comestible selon la revendication 1, caractérisée en ce que la charge correspond à du polydextrose N.

4. Une composition comestible selon la revendication 1, caractérisée en ce que la charge correspond à du polydextrose K.

5. Une composition comestible selon la revendication 1, caractérisée en ce que la charge correspond à du polydextrose amélioré sensiblement exempt d'acide organique de faible poids moléculaire.

6. Une composition comestible selon la revendication 5, caractérisée en ce que les acides organiques de faible poids moléculaire représentent une quantité inférieure à approximativement 0,3% en poids.

7. Une composition comestible selon la revendication 5 ou 6, caractérisée en ce que la charge correspond à du polydextrose amélioré pulvérisé dont le diamètre des particules est inférieur à environ 125 microns.

8. Une composition comestible selon l'une quelconque des revendications 1 à 7, caractérisée en ce que l'agent aromatisant encapsulé correspond à un agent aromatisant hydrophobe comprenant un agent aromatisant et un composant de revêtement hydrophobe sélectionné parmi les graisses, les cires et leur mélange.

9. Une composition comestible selon l'une quelconque des revendications 1 à 7, caractérisée en ce que l'agent aromatisant encapsulé est un agent aromatisant à base de résine hydrophobe comprenant un agent aromatisant, un composant de résine et un composant de revêtement hydrophobe sélectionné parmi les graisses, les cires et leur mélange.

10. Une composition comestible selon l'une quelconque des revendications 1 à 7, caractérisée en ce que l'agent aromatisant encapsulé correspond à un agent aromatisant séché par pulvérisation comprenant un agent aromatisant et un polymère filmogène.

11. Une composition comestible selon l'une quelconque des revendications 1 à 7, caractérisée en ce que l'agent aromatisant encapsulé correspond à un agent aromatisant adsorbé comprenant un agent aromatisant et un agent de sorption.

12. Une composition comestible selon l'une quelconque des revendications précédentes, caractérisée en ce que l'édulcorant intense est l'aspartame.

13. Une composition comestible selon l'une quelconque des revendications précédentes, caractérisée en ce que la charge est présente en une quantité pouvant atteindre approximativement 99,94% en poids de la composition comestible.

14. Une composition comestible selon l'une quelconque des revendications précédentes, caractérisée en ce que l'agent aromatisant est présent en une quantité de 0,05 à 1% de la composition comestible.

15. Une composition comestible selon l'une quelconque des revendications précédentes, caractérisée en ce que l'édulcorant intense est présent en une quantité de 0,01 à 0,5% de la composition comestible.

16. Une composition comestible selon la revendication 17, caractérisée en ce que le polydextrose amélioré pulvérisé est préparé par un procédé qui comprend les étapes de:
    (a) mélange du polydextrose amélioré, substantiellement exempt d'acides organiques de faible poids moléculaire, avec un agent anti-mottage pour former un mélange; et
    (b) pulvérisation du mélange provenant de l'étape (a) pour former du polydextrose amélioré pulvérisé.

17. Une composition comestible selon la revendication 16, caractérisé en ce que l'agent anti-mottage est sélectionné parmi phosphate de calcium, silicate de calcium, stéarate de calcium, cellulose, kaolin, carbonate de magnésium, hydroxyde de magnésium, silicate de magnésium, stéarate de magnésium, dioxyde de silicium, ferrocyanure de sodium, silicoaluminate de sodium, silicoaluminate de sodium-calcium, esters de saccharose, silicate d'aluminium-calcium et leur mélange.

18. Une composition comestible selon la revendication 16 ou 17, caractérisée en ce que l'agent anti-mottage est présent dans le mélange de l'étape (a) en une quantité de 0,1% à 5% en poids du mélange.

19. Une composition comestible selon l'une quelconque des revendications précédentes, caractérisée en ce que la composition est mise sous forme d'un comprimé.

20. Un procédé de préparation d'une composition comestible non caryogène à teneur réduite en calories, selon l'une quelconque des revendications précédentes, qui comprend le mélange de la charge comprenant un polydextrose, de l'agent aromatisant encapsulé et d'une quantité efficace d'un agent édulcorant intense pour former un mélange homogène.

**Revendications pour l'Etat contractant suivant : ES**

1. Un procédé de préparation d'une composition comestible non caryogène à teneur réduite en calories, selon l'une quelconque des revendications précédentes, qui comprend le mélange de l'agent de charge comprenant un polydextrose, de l'agent aromatisant encapsulé et d'une quantité efficace d'un agent édulcorant intense pour former un mélange homogène.

2. Un procédé selon la revendication 1, caractérisé en ce que l'agent de charge correspond à du polydextrose A.

3. Un procédé selon la revendication 1, caractérisé en ce que l'agent de charge correspond à du polydextrose N.

4. Un procédé selon la revendication 1, caractérisé en ce que l'agent de charge correspond à du polydextrose K.

5. Un procédé selon la revendication 1, caractérisé en ce que l'agent de charge correspond à du polydextrose amélioré qui est sensiblement exempt d'acide organique de faible poids moléculaire.

6. Un procédé selon la revendication 5, caractérisé en ce que les acides organiques de faible poids moléculaire représentent une quantité inférieure à approximativement 0,3% en poids.

7. Un procédé selon la revendication 5 ou 6, caractérisé en ce que l'agent de charge correspond à du polydextrose amélioré pulvérisé dont le diamètre des particules est inférieur à environ 125 microns.

8. Un procédé selon l'une quelconque des revendications précédentes, caractérisé en ce que l'agent aromatisant encapsulé correspond à un agent aromatisant hydrophobe comprenant un agent aromatisant et un composant de revêtement hydrophobe sélectionné parmi les graisses, les cires et leur mélange.

9. Un procédé selon l'une quelconque des revendications 1 à 7, caractérisé en ce que l'agent aromatisant encapsulé est un agent aromatisant à base de résine hydrophobe comprenant un agent aromatisant, un composant de résine et un composant de revêtement hydrophobe sélectionné parmi les graisses, les cires et leur mélange.

10. Un procédé selon l'une quelconque des revendications 1 à 7, caractérisé en ce que l'agent aromatisant encapsulé correspond à un agent aromatisant séché par pulvérisation comprenant un agent aromatisant et un polymère filmogène.

11. Un procédé selon l'une quelconque des revendications 1 à 7, caractérisé en ce que l'agent aromatisant encapsulé correspond à un agent aromatisant adsorbé qui comprenant un agent aromatisant et un agent de sorption.

12. Un procédé selon l'une quelconque des revendications précédentes, caractérisé en ce que l'édulcorant intense est l'aspartame.

13. Un procédé selon l'une quelconque des revendications précédentes, caractérisé en ce que la charge est présent en une quantité pouvant atteindre approximativement 99,94% en poids de la composition comestible.

14. Un procédé selon l'une quelconque des revendications précédentes, caractérisé en ce que l'agent aromatisant est présent en une quantité de 0,05 à 1% de la composition comestible.

15. Un procédé selon l'une quelconque des revendications précédentes, caractérisé en ce que l'édulcorant intense est présent en une quantité de 0,01 à 0,5% de la composition comestible.

16. Un procédé selon la revendication 7, caractérisé en ce que le polydextrose amélioré pulvérisé est préparé par un procédé qui comprend les étapes de:
    (a) mélange du polydextrose amélioré substantiellement exempt d'acide organique à faible poids moléculaire avec un agent anti-mottage pour former un mélange; et
    (b) pulvérisation du mélange provenant de l'étape (a) pour former du polydextrose amélioré pulvérisé.

17. Un procédé selon la revendication 16, caractérisé en ce que l'agent anti-mottage est sélectionné parmi phosphate de calcium, silicate de calcium, stéarate de calcium, cellulose, kaolin, carbonate de magnésium, hydroxyde de magnésium, silicate de magnésium, stéarate de magnésium, dioxyde de silicium, ferrocyanure de sodium, silicoaluminate de sodium, silicoaluminate de sodium-calcium, esters de saccharose, silicate d'aluminium-calcium et leur mélange.

18. Un procédé selon la revendication 16 ou 17, caractérisé en ce que l'agent anti-mottage est présent dans le mélange de l'étape (a) en une quantité de 0,1% à 5% en poids du mélange.

19. Un procédé selon l'une quelconque des revendications précédentes, caractérisé en ce que la composition est sous forme d'un comprimé.